# EUROPEAN PATENT APPLICATION

(11) **EP 4 138 500 A1**
(43) Date of publication of application: **22.02.2023**
(21) Application number: 21789249.6
(22) Date of filing: 12.04.2021
(51) Int. Cl.: H04W 72/12, H04W 28/26, H04W 92/18

(54) **METHOD AND APPARATUS FOR SIDELINK COMMUNICATION USING RESERVED RESOURCES IN COMMUNICATION SYSTEM**

(30) Priority: 13.04.2020 US 202063009399 P
(71) Applicant: HYUNDAI MOTOR COMPANY, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: HAHN, Gene Back, Hwaseong-si, Gyeonggi-do 18280 (KR); SON, Hyuk Min, Iksan-si, Jeollabuk-do 54653 (KR)
(74) Representative: Viering, Jentschura & Partner mbB Patent- und Rechtsanwälte
(86) International application number: PCT/KR2021/004596
(87) International publication number: WO 2021/210871

(57) **Abstract**

A method and an apparatus for sidelink communication using a reserved resource in a communication system are disclosed. The operation method of a first terminal may comprise the steps of: generating SCI including a first information element indicating the presence or absence of transmission of SL data #1 using a reserved resource after transmission of SL data #0; transmitting the SCI to a second terminal; and transmitting the SL data #0 to the second terminal on the basis of the SCI.

## Description

### TECHNICAL FIELD

The present disclosure relates to a sidelink communication technique, and more particularly, to a technique of sidelink communication using reserved resources.

### BACKGROUND

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, sidelink communication may be performed using reserved resources. The reserved resources may be configured in advance. Depending on a communication situation, the reserved resources may not be used, and in this case, the resource use efficiency may be reduced.

An objective of the present disclosure for solving the above-described problem is to provide a method and an apparatus for sidelink communication using reserved resources.

### SUMMARY

An operation method of a first terminal, according to a first exemplary embodiment of the present disclosure for achieving the objective, may comprise: generating sidelink control information (SCI) including a first information element indicating whether a transmission of sidelink (SL) data #1 using a reserved resource exists after transmission of SL data #0; transmitting the SCI to a second terminal; and transmitting the SL data #0 to the second terminal based on the SCI.

The first information element is set to a first value or a second value. The first information set to the first value may indicate that the transmission of the SL data #1 using the reserved resource exists, and the first information element set to the second value may indicate that the transmission of the SL data #1 using the reserved resource does not exist or that the reserved resource is released after the transmission of the SL data #0.

The SCI may further include a second information element indicating whether the transmission of the SL data #0 is a transmission by preemption, the second information element is set to a first value or a second value. The second nformation set to the first value may indicate that the transmission of the SL data #0 is not a transmission by preemption, and the second information element set to the second value may indicate that the transmission of the SL data #0 is a transmission by preemption.

The SCI may further include a third information element indicating a reserved resource used for transmission and reception of the SL data #0.

The SCI may include a first-stage SCI and a second-stage SCI, and the first-stage SCI may further include a fourth information element indicating whether to use the second-stage SCI in sidelink communication according to a broadcast scheme.

A maximum of Nₘₐₓ resources may be reserved by the SCI, Nₘₐₓ may be set by a base station, and Nₘₐₓ may be a natural number.

The reserved resource may be configured by the first terminal or a base station.

An operation method of a second terminal, according to a second exemplary embodiment of the present disclosure for achieving the objective, may comprise: receiving sidelink control information (SCI) from a first terminal; receiving sidelink (SL) data #0 from the first terminal based on the SCI; and performing a reception operation of SL data #1 based on a first information element indicating whether a transmission of the SL data #1 using a reserved resource exists after transmission of the SL data #0, the first information element being included in the SCI.

The first information element set to a first value may indicate that the transmission of the SL data #1 using the reserved resource exists, and the first information element set to a second value may indicate that the transmission of the SL data #1 using the reserved resource does not exist or that the reserved resource is released after the transmission of the SL data #0.

The SCI may further include a second information element indicating whether the transmission of the SL data #0 is a transmission by preemption, the second information element set to a first value may indicate that the transmission of the SL data #0 is not a transmission by preemption, and the second information element set to a second value may indicate that the transmission of the SL data #0 is a transmission by preemption.

The SCI may further include a third information element indicating a reserved resource used for transmission and reception of the SL data #0.

The SCI may include a first-stage SCI and a second-stage SCI, and the first-stage SCI may further include a fourth information element indicating whether to use the second-stage SCI in sidelink communication according to a broadcast scheme.

A first terminal according to a third exemplary embodiment of the present disclosure for achieving the objective may comprise: a processor; and a memory storing one or more instructions executable by the processor, wherein the one or more instructions are executed to: generate sidelink control information (SCI) including a first information element indicating whether a transmission of sidelink (SL) data #1 using a reserved resource exists after transmission of SL data #0; transmit the SCI to a second terminal; and transmit the SL data #0 to the second terminal based on the SCI.

The first information element set to a first value may indicate that the transmission of the SL data #1 using the reserved resource exists, and the first information element set to a second value may indicate that the transmission of the SL data #1 using the reserved resource does not exist or that the reserved resource is released after the transmission of the SL data #0.

The SCI may further include a second information element indicating whether the transmission of the SL data #0 is a transmission by preemption, the second information element set to a first value may indicate that the transmission of the SL data #0 is not a transmission by preemption, and the second information element set to a second value may indicate that the transmission of the SL data #0 is a transmission by preemption.

The SCI may further include a third information element indicating a reserved resource used for transmission and reception of the SL data #0.

The SCI may include a first-stage SCI and a second-stage SCI, and the first-stage SCI may further include a fourth information element indicating whether to use the second-stage SCI in sidelink communication according to a broadcast scheme.

According to exemplary embodiments of the present disclosure, a transmitting terminal may transmit sidelink control information (SCI) to a receiving terminal, and may transmit sidelink (SL) data to the receiving terminal based on the SCI. The SCI may include information indicating whether transmission of SL data using a reserved resource exists after the transmission of the current SL data, information indicating whether the transmission of the current SL data is a transmission by preemption, and/or information indicating a reserved resource. Accordingly, the sidelink communication can be efficiently performed based on the information included in the SCI, and the performance of the communication system can be improved.

### BRIEF DESCRIPTION OF THE DRAWINGS

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a sequence chart illustrating a first exemplary embodiment of a sidelink communication method in a communication system.

### DETAILED DESCRIPTION

While the present disclosure is susceptible to various modifications and alternative forms, specific embodiments are shown by way of example in the drawings and described in detail. It should be understood, however, that the description is not intended to limit the present disclosure to the specific embodiments, but, on the contrary, the present disclosure is to cover all modifications, equivalents, and alternatives that fall within the spirit and scope of the present disclosure.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present disclosure. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present disclosure. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present disclosure pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, preferred exemplary embodiments of the present disclosure will be described in detail with reference to the accompanying drawings. In describing the present disclosure, to facilitate the entire understanding, like numbers refer to like elements throughout the description of the figures and the repetitive description thereof will be omitted.

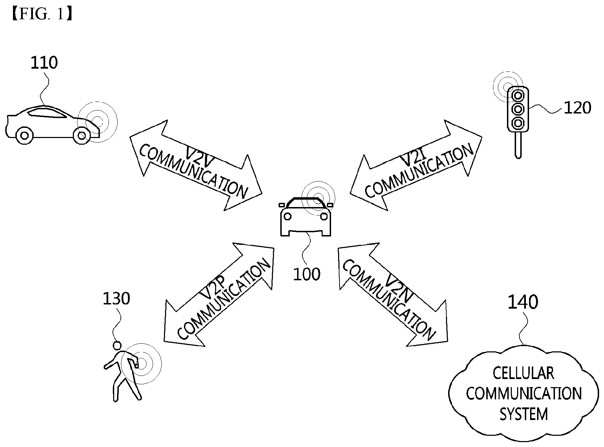

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

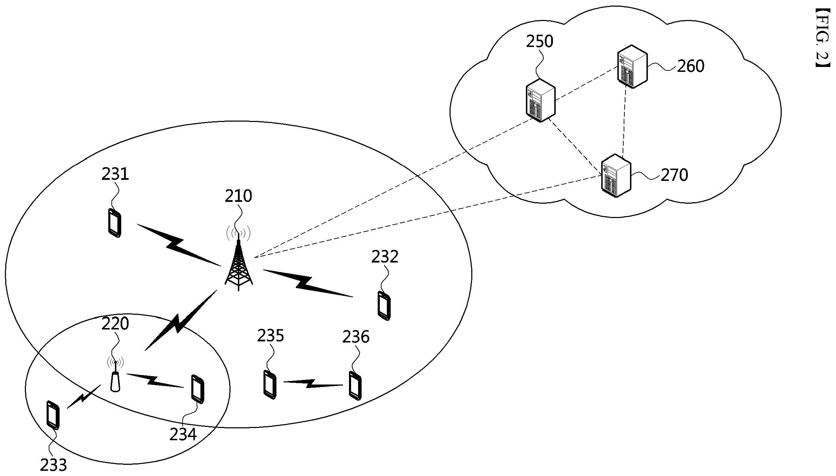

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

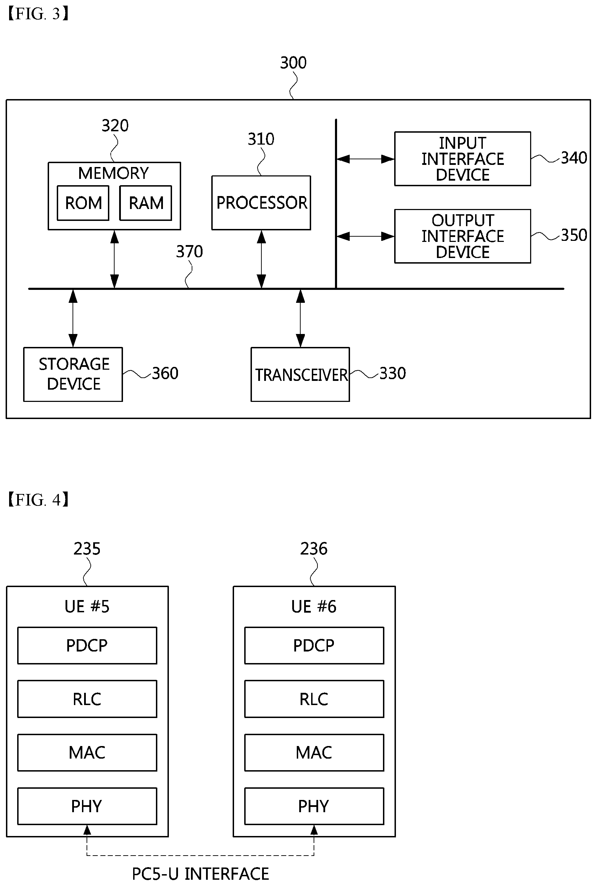

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface. According to an exemplary embodiment of the present disclosure, the processor 310 (e.g., computer, microprocessor, CPU, ASIC, circuitry, logic circuits, etc.) and an associated non-transitory memory storing software instructions which, when executed by the processor 310, provides the functionalities of the input interface device 340, the output interface device 350, and a storage device 360. Herein, the memory and the processor may be implemented as separate semiconductor circuits. Alternatively, the memory and the processor may be implemented as a single integrated semiconductor circuit. The processor may embody one or more processor(s).

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

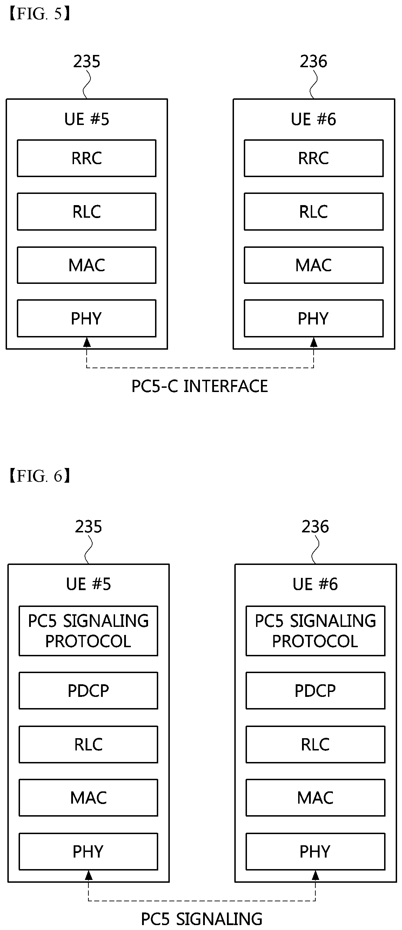

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, methods for retransmitting sidelink data will be described. In the exemplary embodiments, a HARQ response may be referred to as a HARQ-acknowledgement (ACK). The HARQ response may indicate ACK or negative ACK (NACK). A downlink (DL) HARQ response may be a HARQ response to downlink data, an uplink (UL) HARQ response may be a HARQ response to uplink data, and a sidelink (SL) HARQ response may be a HARQ response to sidelink data.

Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a `higher layer message' or `higher layer signaling message'. A message used for MAC signaling may be referred to as a 'MAC message' or 'MAC signaling message'. A message used for PHY signaling may be referred to as a `PHY message' or `PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as `first-stage SCI', and the 2nd-stage SCI may be referred to as 'second-stage SCI'. A first-stage SCI format may include an SCI format 1-A, and a second-stage SCI format may include an SCI format 2-A, an SCI format 2-B, and an SCI format 2-C.

The 1st-stage SCI may include or more information elements among priority information, frequency resource assignment information, time resource assignment information, resource reservation period information, demodulation reference signal (DMRS) pattern information, 2nd-stage SCI format information, a beta offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

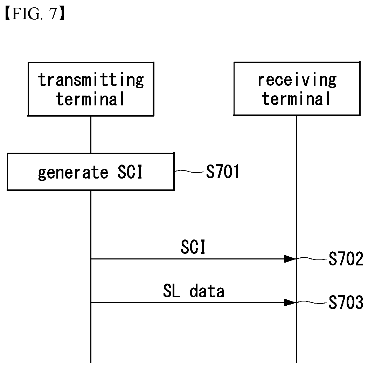

FIG. 7 is a sequence chart illustrating a first exemplary embodiment of a sidelink communication method in a communication system.

As shown in FIG. 7, a communication system may include a transmitting terminal (e.g., first terminal) and a receiving terminal (e.g., second terminal). The transmitting terminal may be the UE 235 shown in FIG. 2, and the receiving terminal may be the UE 236 shown in FIG. 2. The transmitting terminal and the receiving terminal may be configured identically or similarly to the communication node 300 shown in FIG. 3. The transmitting terminal and the receiving terminal may support the protocol stacks shown in FIGS. 4 to 6.

The transmitting terminal may generate an SCI to perform sidelink communication with the receiving terminal (S701). The SCI may include a first-stage SCI and/or a second-stage SCI. The transmitting terminal may transmit the SCI to the receiving terminal on a PSCCH and/or a PSSCH (S702). The receiving terminal may receive the SCI from the transmitting terminal by performing a monitoring operation on the PSCCH and/or the PSSCH, and may identify information element(s) included in the SCI. The transmitting terminal may transmit sidelink (SL) data to the receiving terminal based on the information element(s) included in the SCI (S703). The SL data may be transmitted on a PSSCH indicated by the SCI. The receiving terminal may receive the SL data from the transmitting terminal based on the information element(s) included in the SCI. In addition, the receiving terminal may perform an operation of receiving other SL data after the received SL data based on the information element(s) included in the SCI (e.g., information element(s) described in Table 3 below).

The above-described SCI (e.g., first-stage SCI and/or second-stage SCI) may further include one or more information elements described in Table 3 below. That is, the information element(s) listed in Table 3 may be included in at least one of the first-stage SCI and the second-stage SCI. Here, `SL transmission' may be `transmission of an SCI', 'transmission of SL data', or `transmission of an SCI + transmission of SL data scheduled by the SCI'.

**[Table 3]**

| **Information elements** | **Description** |
|---|---|
| First information element | The first information element may indicate that an SL transmission using reserved resource(s) exists after the current SL transmission, that an SL transmission using reserved resource(s) does not exist after the current SL transmission, or that a reserved resource after the current SL transmission is released. |
| Second information element | The second information element may indicate that the current SL transmission is not a transmission by preemption, or that the current SL transmission is a transmission by preemption. |
| Third information element | The third information element may indicate reserved resource(s). For example, the third information element may indicate an index(es) of the reserved resource(s). |
| Fourth information element | The fourth information element may indicate whether a second-stage SCI is used or not in sidelink communication according to a broadcast scheme. |

The fourth information element may be included in a first-stage SCI, and the size of the fourth information element may be 1 bit. The fourth information element may indicate whether there is a second-stage SCI associated with the first stage SCI in sidelink communication according to a broadcast scheme. The maximum number of resources that can be reserved using one SCI may be defined as Nₘₐₓ. The transmitting terminal may reserve n resources by using one SCI. n may be defined as (1 ≤ n ≤ Nₘₐₓ). Each of n and Nₘₐₓ may be a natural number. The n reserved resources may be periodic resources or aperiodic resources.

The base station may transmit information indicating the maximum number Nₘₐₓ of reservable resources by using one or more of higher layer signaling (e.g., system information, RRC message, or the like), MAC signaling (e.g., MAC CE), and PHY signaling (e.g., DCI format 3_0 and DCI format 3_1). The reserved resource(s) may be configured by the base station. In this case, the base station may transmit configuration information of the reserved resource(s) by using one or more of higher layer signaling, MAC signaling, and PHY signaling. PSCCH(s) and/or PSSCH(s) may be transmitted in n reserved resources. The first-stage SCI may include an information element indicating an order of the reserved resource (e.g., transmission resource) in which the first-stage SCI is transmitted. An index of the reserved resource (e.g., transmission resource) may be set to one of 0 to Nₘₐₓ-1.

When the number of bits for expressing an index of a reserved resource is not sufficient, the bits may indicate whether an SL transmission using a reserved resource after the current SL transmission exists or not instead of an index of a reserved resource. For example, the first information element included in the SCI (e.g., first-stage SCI and/or second-stage SCI) may be set as shown in Table 4 below.

**[Table 4]**

| **First information element** | **Description** |
|---|---|
| First value (e.g., 0) | The first value may indicate that an SL transmission using a reserved resource after the current SL transmission exists. |
| Second value (e.g., 1) | The second value may indicate that an SL transmission using a reserved resource after the current SL transmission does not exist. |

The size of the first information element may be 1 bit. The first value may be 0 or 1, and the second value may be 1 or 0. The first information element included in the SCI may be set as shown in Table 5 below in consideration of the number n of reserved resources. The reserved resources #0 to #3 may be contiguous resources or non-contiguous resources.

**[Table 5]**

| | **First information element included in SCI transmitted in the reserved resource #0** | **First information element included in SCI transmitted in the reserved resource #1** | **First information element included in SCI transmitted in the reserved resource #2** | **First information element included in SCI transmitted in the reserved resource #3** |
|---|---|---|---|---|
| n=1 | 1 | N/A | N/A | N/A |
| n=2 | 0 | 1 | N/A | N/A |
| n=3 | 0 | 0 | 1 | N/A |
| n=4 | 0 | 0 | 0 | 1 |

When the number of reserved resources is 1 (i.e., n = 1), since there is no SL transmission after the SL transmission in the reserved resource #0, the first information element included in the SCI (e.g., first-stage SCI) transmitted in the reserved resource #0 may be set to 1. When the number of reserved resources is 2 (i.e., n = 2), the first information element included in the SCI transmitted in the reserved resource #0 may be set to 0, and the first information element included in the SCI transmitted in the reserved resource #1 may be set to 1.

When the number of reserved resources is 3 (i.e., n = 3), the first information elements included in the SCIs transmitted in the reserved resources #0 and #1 may be set to 0, and the first information element in the SCI transmitted in the reserved resource #2 may be set to 1. When the number of reserved resources is 4 (i.e., n = 4), the first information element included in the SCIs transmitted in the reserved resources #0 to #2 may be set to 0, and the first information element in the SCI transmitted in the reserved resource #3 may be set to 1. Here, 'existence of SL transmission' may mean that the SL transmission is performed. `Non-existence of SL transmission' may mean that the SL transmission is not performed.

In another exemplary embodiment, the first information element may be set as shown in Table 6 below.

**[Table 6]**

| **First information element** | **Description** |
|---|---|
| First value (e.g., 0) | The first value may indicate that an SL transmission using a reserved resource after the current SL transmission exists. |
| Second value (e.g., 1) | The second value may indicate that a reserved resource after the current SL transmission is released. |

The size of the first information element may be 1 bit. The first value may be 0 or 1, and the second value may be 1 or 0. The first information element included in the SCI may be set as shown in Table 7 below in consideration of the number n of reserved resources. The reserved resources #0 to #3 may be contiguous resources or non-contiguous resources.

**[Table 7]**

| | **First information element included in SCI transmitted in the reserved resource #0** | **First information element included in SCI transmitted in the reserved resource #1** | **First information element included in SCI transmitted in the reserved resource #2** | **First information element included in SCI transmitted in the reserved resource #3** |
|---|---|---|---|---|
| n=2 | 1 | N/A | N/A | N/A |
| n=3 | 0 | 1 | released | N/A |
| n=4 | 0 | 1 | released | released |

When the number of reserved resources is 2 (i.e., n = 2), the first information element included in the SCI transmitted in the reserved resource #0 may be set to 1. The first information element set to 1 may indicate that an SL transmission is not performed in a reserved resource after the reserved resource #0. That is, the first information element set to 1 may indicate release of the reserved resource.

When the number of reserved resources is 3 (i.e., n = 3), the first information element included in the SCI transmitted in the reserved resource #1 may be set to 1. In this case, SL transmission may be performed up to the reserved resource #1, and reserved resource(s) after the reserved resource #1 may be released. That is, SL transmission may not be performed in the reserved resource #2.

When the number of reserved resources is 4 (i.e., n = 4), the first information element included in the SCI transmitted in the reserved resource #1 may be set to 1. In this case, SL transmission may be performed up to the reserved resource #1, and reserved resource(s) after the reserved resource #1 may be released. That is, SL transmission may not be performed in the reserved resources #2 and #3.

The first information element defined in Table 4 may be transmitted in the last reserved resource in which SL transmission is performed. On the other hand, the first information element defined in Table 6 may be transmitted in any reserved resource among the reserved resources in which SL transmission is performed.

Meanwhile, the SCI (e.g., first-stage SCI and/or second-level SCI) may include the second information element. The second information element may be set as shown in Table 8 below.

**[Table 8]**

| **Second information element** | **Description** |
|---|---|
| First value (e.g., 0) | The first value may indicate that the current SL transmission is not a transmission by preemption. |
| Second value (e.g., 1) | The second value may indicate that the current SL transmission is a transmission by preemption. |

The second information element set to the second value may indicate that emergency data is to be transmitted instead of SL data in a reserved resource associated with the second information element. The size of the second information element may be 1 bit. The first value may be 0 or 1, and the second value may be 1 or 0. The second information element included in the SCI may be set as shown in Table 9 below in consideration of the number (n) of reserved resources.

**[Table 9]**

| | **Second information element included in SCI transmitted in the reserved resource #0** | **Second information element included in SCI transmitted in the reserved resource #1** | **Second information element included in SCI transmitted in the reserved resource #2** | **Second information element included in SCI transmitted in the reserved resource #3** |
|---|---|---|---|---|
| n=2 | 1 | 0 | N/A | N/A |
| n=3 | 0 | 1 | 0 | N/A |
| n=4 | 0 | 1 | 1 | 0 |

The second information element set to 0 may indicate that the current SL transmission is not a transmission by preemption. The second information element set to 1 may indicate that the current SL transmission is a transmission by preemption. When the number of reserved resources is 2 (i.e., n = 2), the second information element included in the SCI transmitted in the reserved resource #0 may be set to 1, and the second information element included in the SCI transmitted in the reserved resource #1 may be set to 0. In this case, transmission of emergency data may be performed in the reserved resource #0, and transmission (e.g., SL transmission) of normal data may be performed in the reserved resource #1.

When the number of reserved resources is 3 (i.e., n = 3), the second information element included in the SCI transmitted in the reserved resource #0 may be set to 0, the second information element included in the SCI transmitted in the reserved resource #1 may be set to 1, and the second information element included in the SCI transmitted in the reserved resource #2 may be set to 0. In this case, transmission of emergency data may be performed in the reserved resource #1, and transmission (e.g., SL transmission) of normal data may be performed in the reserved resources #0 and #2.

When the number of reserved resources is 4 (i.e., n = 4), the second information element included in the SCIs transmitted in the reserved resources #0 and #3 may be set to 0, and the second information element included in the SCIs transmitted in the reserved resources #1 and #2 may be set to 1. In this case, transmission of emergency data may be performed in the reserved resources #1 and #2, and transmission (e.g., SL transmission) of normal data may be performed in the reserved resources #0 and #3.

Meanwhile, one SCI may reserve n resources (e.g., up to Nₘₐₓ resources). The n reserved resources may be periodic resources or aperiodic resources. When SL transmission (e.g., PSCCH and/or PSSCH transmission) is performed in the n reserved resources, information indicating an order of a reserved resource in which an SL transmission is performed among the n resource resources may be included in the SCI (e.g., first-stage SCI and/or second-stage SCI). That is, the SCI may include an information element (e.g., third information element) that explicitly or implicitly indicates the reserved resource in which the SL transmission is performed. An index of the reserved resource may be set to one of 0 to Nₘₐₓ-1. The third information element included in the SCI may be set as shown in Table 10 below.

**[Table 10]**

| **Third information element** | **Description** |
|---|---|
| First value (e.g., 00) | The first value may indicate the first reserved resource among the reserved resources. |
| Second value (e.g., 01) | The second value may indicate the second reserved resource among the reserved resources. |
| Third value (e.g., 10) | The third value may indicate the third reserved resource among the reserved resources. |
| Fourth value (e.g., 11) | The fourth value may indicate the fourth reserved resource among the reserved resources. |

The size of the third information element may be 2 bits. In this case, the first value may be 00, the second value may be 01, the third value may be 10, and the fourth value may be 11. The third information element included in the SCI may be set as shown in Table 11 below in consideration of the number (n) of reserved resources.

**[Table 11]**

| | **Third information element included in SCI transmitted in the reserved resource #0** | **Third information element included in SCI transmitted in the reserved resource #1** | **Third information element included in SCI transmitted in the reserved resource #2** | **Third information element included in SCI transmitted in the reserved resource #3** |
|---|---|---|---|---|
| n=1 | 00 | N/A | N/A | N/A |
| n=2 | 00 | 01 | N/A | N/A |
| n=3 | 00 | 01 | 10 | N/A |
| n=4 | 00 | 01 | 10 | 11 |

When the number of reserved resources is 1 (i.e., n = 1), the third information element included in the SCI transmitted in the reserved resource #0 may be set to 00, and the third information element set to 00 is may indicate that SL transmission is performed in the first reserved resource. When the number of reserved resources is 2 (i.e., n = 2), the third information element included in the SCI transmitted in the reserved resource #0 may be set to 00, and the third information element included in the SCI transmitted in the reserved resource #1 may be set to 01. The third information element set to 01 may indicate that SL transmission is performed in the second reserved resource.

When the number of reserved resources is 3 (i.e., n = 3), the third information element included in the SCI transmitted in the reserved resource #0 may be set to 00, the third information element included in the SCI transmitted in the reserved resource #1 may be set to 01, and the third information element included in the SCI transmitted in the reserved resource #2 may be set to 10. The third information element set to 10 may indicate that SL transmission is performed in the third reserved resource.

When the number of reserved resources is 4 (i.e., n = 4), the third information element included in the SCI transmitted in the reserved resource #0 may be set to 00, the third information element included in the SCI transmitted in the reserved resource #1 may be set to 01, the third information element included in the SCI transmitted in the reserved resource #2 may be set to 10, and the third information element included in the SCI transmitted in the reserved resource #3 may be set to 11. The third information element set to 11 may indicate that SL transmission is performed in the fourth reserved resource.

In another exemplary embodiment, the third information element included in the SCI may be set as shown in Table 12 below.

**[Table 12]**

| **Third information element** | **Description** |
|---|---|
| First value (e.g., 00) | The first value may indicate the first reserved resource among the reserved resources. |
| Second value (e.g., 01) | The second value may indicate the second reserved resource among the reserved resources. |
| Third value (e.g., 10) | The third value may indicate the third reserved resource among the reserved resources. |
| Fourth value (e.g., 11) | The fourth value may indicate the fourth reserved resource, or may indicate that an SL transmission using a reserved resource after the fourth reserved resource does not exist. |

The third information element included in the SCI according to Table 12 may be set as shown in Table 13 below in consideration of the number n of reserved resources. According to Table 13, the third information element set to 11 may indicate that an SL transmission in the current reserved resource is the last SL transmission.

**[Table 13]**

| | **Third information element included in SCI transmitted in the reserved resource #0** | **Third information element included in SCI transmitted in the reserved resource #1** | **Third information element included in SCI transmitted in the reserved resource #2** | **Third information element included in SCI transmitted in the reserved resource #3** |
|---|---|---|---|---|
| n=2 | 00 | 11 | N/A | N/A |
| n=3 | 00 | 01 | 11 | N/A |
| n=4 | 00 | 01 | 10 | 11 |

When the number of reserved resources is 2 (i.e., n = 2), the third information element included in the SCI transmitted in the reserved resource #0 may be set to 00, and the third information element included in the SCI transmitted in the reserved resource #1 (e.g., the last reserved resource) may be set to 11. When the number of reserved resources is 3 (i.e., n = 3), the third information element included in the SCI transmitted in the reserved resource #0 may be set to 00, the third information element included in the SCI transmitted in the reserved resource #1 may be set to 01, and the third information element included in the SCI transmitted in the reserved resource #2 (e.g., the last reserved resource) may be set to 11.

When the number of reserved resources is 4 (i.e., n = 4), the third information element included in the SCI transmitted in the reserved resource #0 may be set to 00, the third information element included in the SCI transmitted in the reserved resource #1 may be set to 01, the third information element included in the SCI transmitted in the reserved resource #2 may be set to 10, and the third information element included in the SCI transmitted in the reserved resource #3 (e.g., the last reserved resource) may be set to 11.

In another exemplary embodiment, the third information element included in the SCI according to Table 12 may be set as shown in Table 14 below in consideration of the number n of reserved resources. According to Table 14, the third information element set to 11 may indicate release of the reserved resource. In this case, the third information element (e.g., the third information element set to 11) may be transmitted in any reserved resource among the reserved resources.

**[Table 14]**

| | **Third information element included in SCI transmitted in the reserved resource #0** | **Third information element included in SCI transmitted in the reserved resource #1** | **Third information element included in SCI transmitted in the reserved resource #2** | **Third information element included in SCI transmitted in the reserved resource #3** |
|---|---|---|---|---|
| n=2 | 11 | released | N/A | N/A |
| n=3 | 00 | 11 | released | N/A |
| n=4 | 00 | 11 | released | released |

When the number of reserved resources is 2 (i.e., n = 2), the third information element included in the SCI transmitted in the reserved resource #0 may be set to 11. The third information element set to 11 may indicate that SL transmission is not performed in the reserved resource after the reserved resource #0. That is, the third information element set to 11 may indicate release of the reserved resource.

When the number of reserved resources is 3 (i.e., n = 3), the third information element included in the SCI transmitted in the reserved resource #1 may be set to 11. In this case, SL transmission may be performed up to the reserved resource #1, and the reserved resource(s) after the reserved resource #1 may be released. That is, SL transmission may not be performed in the reserved resource #2.

When the number of reserved resources is 4 (i.e., n = 4), the third information element included in the SCI transmitted in the reserved resource #1 may be set to 11. In this case, SL transmission may be performed up to the reserved resource #1, and the reserved resource(s) after the reserved resource #1 may be released. That is, SL transmission may not be performed in the reserved resources #2 and #3.

In the exemplary embodiment according to Table 14, the third information element set to 11 may be interpreted as indicating that no additional SL transmission exists. In this case, reserved resources may not exist, and accordingly, an operation of releasing the reserved resources may not be performed.

Meanwhile, the SCI (e.g., first-stage SCI and/or second-stage SCI) may include one or more or a combination of two or more of the first information element, the second information element, the third information element, and the fourth information element. For example, the SCI may include a combination of the first information element (e.g., the first information element defined in Table 4 or Table 6) and the second information element (e.g., the second information element defined in Table 8). In this case, the SCI may include a 2-bit field corresponding to a combination of the first information element and the second information element. For another example, the SCI may include a combination of the second information element (e.g., the second information element defined in Table 8) and the third information element (e.g., the third information element defined in Table 10 or Table 12). In this case, the SCI may include a 3-bit field corresponding to a combination of the second information element and the third information element.

In order to reduce the overhead of the first-stage SCI, the above-described exemplary embodiments may be extended in conjunction with the second-stage SCI. For example, the first-stage SCI may include the first information element (e.g., the first information element defined in Table 4 or Table 6), and the second-stage SCI may include the second information element (e.g., the second information element defined in Table 8) and/or the third information element (e.g., the third information element defined in Table 10 or Table 12). For another example, the first-stage SCI may include the third information element (e.g., the third information element defined in Table 10 or Table 12), and the second stage SCI may include the first information element (e.g., the first information element defined in Table 4 or Table 6) and/or the second information element (e.g., the second information element defined in Table 8).

Regardless of a cast type (e.g., broadcast, groupcast, multicast, unicast), the first-stage SCI may include an indicator indicating whether the second-stage SCI associated with the first-stage SCI includes the first information element, the second information element, the third information element, and/or the fourth information element. The size of the indicator may be 1 bit.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a first terminal in a communication system, comprising:
generating sidelink control information (SCI) including a first information element indicating whether a transmission of sidelink (SL) data #1 using a reserved resource exists after transmission of SL data #0;
transmitting the SCI to a second terminal; and
transmitting the SL data #0 to the second terminal based on the SCI.

2. The operation method according to claim 1, wherein the first information element is set to a first value or a second value, the first information set to first value indicates that the transmission of the SL data #1 using the reserved resource exists, and the first information element set to the second value indicates that the transmission of the SL data #1 using the reserved resource does not exist or the reserved resource is released after the transmission of the SL data #0.

3. The operation method according to claim 1, wherein the SCI further includes a second information element indicating whether the transmission of the SL data #0 is a transmission by preemption, the second information element is set to a first value or a second value, the second information set to the first value indicates that the transmission of the SL data #0 is not a transmission by preemption, and the second information element set tothe second value indicates that the transmission of the SL data #0 is a transmission by preemption.

4. The operation method according to claim 1, wherein the SCI further includes a third information element indicating a reserved resource used for transmission and reception of the SL data #0.

5. The operation method according to claim 1, wherein the SCI includes a first-stage SCI and a second-stage SCI, and the first-stage SCI further includes a fourth information element indicating whether to use the second-stage SCI in sidelink communication according to a broadcast scheme.

6. The operation method according to claim 1, wherein a maximum of Nₘₐₓ resources are reserved by the SCI, Nₘₐₓ is set by a base station, and Nₘₐₓ is a natural number.

7. The operation method according to claim 1, wherein the reserved resource is configured by the first terminal or a base station.

8. An operation method of a second terminal in a communication system, comprising:
receiving sidelink control information (SCI) from a first terminal;
receiving sidelink (SL) data #0 from the first terminal based on the SCI; and
performing a reception operation of SL data #1 based on a first information element indicating whether a transmission of the SL data #1 using a reserved resource exists after transmission of the SL data #0, the first information element being included in the SCI.

9. The operation method according to claim 8, wherein the first information element is set to a first value or a second value, the first information element set to the first value indicates that the transmission of the SL data #1 using the reserved resource exists, and the first information element set to the second value indicates that the transmission of the SL data #1 using the reserved resource does not exist or that the reserved resource is released after the transmission of the SL data #0.

10. The operation method according to claim 8, wherein the SCI further includes a second information element indicating whether the transmission of the SL data #0 is a transmission by preemption, the second information element is set to a first value or a second value, the second information element set to the first value indicates that the transmission of the SL data #0 is not a transmission by preemption, and the second information element set to the second value indicates that the transmission of the SL data #0 is a transmission by preemption.

11. The operation method according to claim 8, wherein the SCI further includes a third information element indicating a reserved resource used for transmission and reception of the SL data #0.

12. The operation method according to claim 8, wherein the SCI includes a first-stage SCI and a second-stage SCI, and the first-stage SCI further includes a fourth information element indicating whether to use the second-stage SCI in sidelink communication according to a broadcast scheme.

13. A first terminal in a communication system, comprising:
a processor; and
a memory storing one or more instructions executable by the processor,
wherein the one or more instructions are executed to:
generate sidelink control information (SCI) including a first information element indicating whether a transmission of sidelink (SL) data #1 using a reserved resource exists after transmission of SL data #0;
transmit the SCI to a second terminal; and
transmit the SL data #0 to the second terminal based on the SCI.

14. The first terminal according to claim 13, wherein the first information element is set to a first value or a second value, the first information element set to the first value indicates that the transmission of the SL data #1 using the reserved resource exists, and the first information element set to the second value indicates that the transmission of the SL data #1 using the reserved resource does not exist or that the reserved resource is released after the transmission of the SL data #0.

15. The first terminal according to claim 13, wherein the SCI further includes a second information element indicating whether the transmission of the SL data #0 is a transmission by preemption, the second information element is set to a first value or a second value, the second information element set to the first value indicates that the transmission of the SL data #0 is not a transmission by preemption, and the second information element set to the second value indicates that the transmission of the SL data #0 is a transmission by preemption.

16. The first terminal according to claim 13, wherein the SCI further includes a third information element indicating a reserved resource used for transmission and reception of the SL data #0.

17. The first terminal according to claim 13, wherein the SCI includes a first-stage SCI and a second-stage SCI, and the first-stage SCI further includes a fourth information element indicating whether to use the second-stage SCI in sidelink communication according to a broadcast scheme.
